# EUROPÄISCHE PATENTANMELDUNG

(11) **EP 1 884 393 A2**
(43) Veröffentlichungstag der Anmeldung: **06.02.2008**
(21) Anmeldenummer: 07011855.9
(22) Anmeldetag: 18.06.2007
(51) Int. Cl.: B60J 10/02

(54) **Montagevorrichtung und Montageverfahren zum Montieren eines Profils an einer Scheibe**

(30) Priorität: 07.07.2006 DE 102006031821
(71) Anmelder: Elkamet Kunststofftechnik GmbH, 35216 Biedenkopf (DE)
(72) Erfinder: Platt, Wolfgang, 35216 Biedenkopf-Kombach (DE)
(74) Vertreter: Buchhold, Jürgen

(57) **Zusammenfassung**

Der Gegenstand der vorliegenden Anmeldung betrifft Montagevorrichtung (1) und ein Montageverfahren zum Montieren eines Profils (11) an einer Scheibe, insbesondere an einer Windschutzscheibe eines Kraftfahrzeugs, umfassend: eine Scheiben-Zuführeinrichtung (3) zum Zuführen einer Scheibe zu einer ersten vorbestimmten Montageposition, eine Profil-Zuführeinrichtung (4) zum Zuführen eines Profils (11) zu einer zu der ersten Montageposition benachbarten, zweiten Montageposition. Fügernittel, um das Profil (11) und die Scheibe an einer gemeinsamen Fügeposition zusammenzufügen, wobei die Fügemittel elastisch, dehnbare Anpressmittel (12) umfassen, welche bei Aktivierung sich hinsichtlich ihres Volumens ausdehnen, wodurch Scheibe und Profil (11) zusammengefügt werden.

## Beschreibung

Die Erfindung betrifft eine Montagevorrichtung gemäß Anspruch 1. Weiter betrifft die Erfindung einen Montagetisch gemäß Anspruch 17. Zudem betrifft die Erfindung ein Montageverfahren gemäß Anspruch 18, ein Computerprogramm gemäß Anspruch 23 und ein Computerprogramm-Produkt gemäß Anspruch 24. Nicht zuletzt betrifft die Erfindung die Verwendung einer Montagevorrichtung gemäß Anspruch 20.

Allgemein bekannt sind derartige Vorrichtungen aus dem Stand der Technik, bei denen ein Gummiprofil mit einer Windschutzscheibe an deren Kantenbereich in einer Montagevorrichtung zusammengefügt wird, wobei das Gummiprofil über einen oder mehrere Rollenkörper, die entlang des Gummiprofils, wenn dieses entsprechend an der Windschutzscheibe positioniert ist, eine Vor-und-Zurück-Bewegung ausführen, um dieses an die Windschutzscheibe zu pressen.

Nachteil an dieser Lösung ist, dass zum einen das Gummiprofil und die Windschutzscheibe schon optimal zueinander ausgerichtet werden müssen, was insbesondere aufgrund der hohen Präzision einen enormen Aufwand erfordert. Zum anderen muss dieses Ausrichten schnell durchgeführt werden, da zur dauerhaften Verbindung von Gummiprofil und Windschutzscheibe das Gummiprofil mittels eines Haftvermittlers an der Scheibe angebracht wird, und dieser innerhalb einer vorgegebenen, meist kurz bemessenen Zeitspanne an der Windschutzscheibe eine haftschlüssige Verbindung herstellt, so dass die korrekte Position schnell erreicht werden muss, da sonst das Profil an der falschen Stelle anhaftet.

Aufgabe der vorliegenden Erfindung ist es deshalb, eine Montagevorrichtung, ein Montagetisch und ein Verfahren zu schaffen, bei der eine weniger komplexe Montage von Profil und Scheibe gewährleistet werden kann, wobei eine Verbindung mittels Haftvermittler zuverlässig ausgeführt werden kann.

Die Aufgabe wird gelöst durch eine Montagevorrichtung gemäß dem Anspruch 1, einen Montagetisch gemäß dem Anspruch 17 und ein Montageverfahren gemäß dem Anspruch 18.

Zudem ist es eine Aufgabe der Erfindung ein Computerprogramm und ein Computerprogrammprodukt zu schaffen, welches geeignet ist, das Verfahren auf einem Computer umzusetzen.

Diese Aufgabe wird durch ein Computerprogramm gemäß Anspruch 23 und ein Computerprogrammprodukt gemäß Anspruch 24 gelöst.

Die Erfindung schließt die technische Lehre ein, dass eine Montagevorrichtung zum Montieren eines Profils an einer Scheibe, insbesondere an einer Windschutzscheibe eines Kraftfahrzeugs eine Scheiben-Zuführeinrichtung zum Zuführen einer Scheibe zu einer ersten vorbestimmten Montageposition, eine Profü-Zuführeinrichtung zum Zuführen eines Profils zu einer zu der ersten Montageposition benachbarten, zweiten Montageposition und Fügemittel umfasst, um das Profil und die Scheibe an einer gemeinsamen Fügeposition zusammenzufügen, wobei die Fügemittel elastisch, dehnbare Anpressmittel umfassen, welche bei Aktivierung sich hinsichtlich ihres Volumens verändern, wodurch Scheibe und Profil zusammengefügt werden.

Die Volumenveränderung kann eine Volumenausdehnung, eine Volumendeformation und/oder eine sonstige Volumenveränderung umfassen.

Die Volumenveränderung bietet den Vorteil, dass zum Beispiel durch eine Volumenausdehnung der Anpressmittel neben der Erzeugung eines entsprechenden Anpressdrucks auch etwaige Toleranzen, insbesondere Toleranzen der Fügepartner, Spalte oder dergleichen, die aufgrund einer weniger genauen Ausrichtung entstehen können, ausgleichbar sind. Hierdurch kann eine gröbere und damit schnellere Positionierung durchgeführt werden, wobei das dadurch vorhandene Spiel ausgeglichen wird. Dies gewährt wiederum einen höheren Durchsatz bei zumindest gleich bleibender, in der Regel verbesserter Qualität. Durch eine Volumenausdehnung oder Volumendeformation kann analog ein gleicher Effekt erzielt werden. Volumenausdehnung und Volumendeformation können separat oder in Kombination auftreten.

Die Anpressmittel sind dabei elastisch ausgebildet, da diese nach dem Anpressen wieder in ihre ursprüngliche Form zurück reduziert werden sollen um, für nachfolgende Füge-Prozesse wieder verwendet zu werden.

Die Volumenveränderung, insbesondere die Volumenausdehnung erfolgt bevorzugt in alle Richtungen der Anpressmittel gleichmäßig. Bevorzugt kann das Anpressmittel auch so ausgebildet sein, dass dieses sich nur in einem Teilbereich oder in eine Richtung ausdehnt, beispielsweise durch Verbunde mit anderen Materialien oder durch Gehäuse und dergleichen.

Bevorzugt kann die Volumenveränderung, insbesondere bei der Volumendeformation, in unterschiedliche Richtungen der Anpressmittel ungleichmäßig ausgebildet sein. So wird zum Beispiel beim Zusammendrückender Anpressmittel in eine Richtung eine Ausdehnung der Anpressmittel in eine andere Richtung bewirkt.

Die Aktivierung kann jede denkbare Aktivierung sein. So kann zum Beispiel die Aktivierung über thermische Energie erfolgen, die beispielsweise eine Temperaturerhöhung des Anpressmittels bewirkt, wodurch dieses sich ausdehnt. Andererseits kann die Aktivierung auch mittels einer Temperaturabsenkung erfolgen, beispielsweise bei der Verwendung von Wasser oder bei Werkstoffen mit Formgedächtnis, bei denen eine Temperaturreduzierung eine Volumendehnung bewirkt. Eine weitere Aktivierung kann das Beaufschlagen mit einem Druckmittel wie einem hydraulischen Öl oder Druckluft sein. Noch eine weitere Aktivierung kann die Lageänderung der Gehäuseteile sein, Durch die Lageänderung kann eine Deformation der Anpressmittel erzeugt werden, indem die Anpressmittel beispielsweise zusammengedrückt werden.

Ein bevorzugtes Ausführungsbeispiel sieht vor, dass die Anpressmittel ein erstes Schlauchelement aus einem elastischen Material umfassen. Das Schlauchelement kann besonders gut entlang eines Profils angeordnet werden, da es, wenn es nicht druckbeaufschlagt ist, gute elastische Eigenschaften aufweist. Das elastische Material kann bevorzugt jedes elastische Material sein, und ist bevorzugt ein Gummimaterial.

Auch bevorzugt ist, dass die Anpressmittel ein zweites Schlauchelement aus einem elastischen Material umfassen. Auf diese Weise ist eine einfache und weniger aufwendige Lösung realisiert, um geeignete Anpressmittel bereit zustellen. Beide Schlauchelemente lassen sich aus dem gleichen Werkstoff herstellen und können hinsichtlich ihrer Geometrie ähnlich oder andersartig ausgebildet sein. Durch die gleichartige Ausbildung, insbesondere der Aktivierungsart, lassen sich gleiche Ansteuerungen für das Druckbeaufschlagen verwenden und die Lagerhaltung an Ersatzteilen kann reduziert werden. Zudem ist die Mechanik der Vorrichtung weniger komplex ausgebildet und das Steuerverfahren, insbesondere die Software, zur Steuerung der Vorrichtung ist weniger komplex ausgestaltet.

Zudem ist bevorzugt, dass die Profil-Zuführeinrichtung eine Profilaufnahme zur Aufnahme des Profils umfasst. Über die Profilaufnahme kann das Profil, welches bevorzugt ein Kunststoffprofil ist, einfach aufgenommen werden. Über diese Aufnahme ist das Profil an der Profil-Zuführeinrichtung optimal aufgenommen und lässt sich entsprechend gut zuführen.

Auch sieht ein bevorzugtes Ausführungsbeispiel vor, dass die Profil-Zuführeinrichtung weiter einen verfahrbaren Profilaufnahmeschlitten umfasst, an dem die Profilaufnahme ausgebildet ist. Über diesen lässt sich die Profilaufnahme auch mit dem aufgenommenen Profil optimal verfahren. Der Profilaufnahmeschlitten kann dabei in eine oder mehrere Richtungen verfahrbar ausgebildet werden.

Weiter ist bevorzugt, dass die Profilaufnahme eine Aufnahmespur zur Aufnahme des Profils aufweist. Die Ausbildung als Aufnahmespur bietet eine einfach herstellbare Aufnahme, welche optimiert ein Profil aufnehmen kann. Über eine Aufnahmespur lassen sich auch komplexe Profile aufnehmen. Insbesondere lassen sich über eine Aufnahmespur komplexe Kunststoffprofile aufnehmen. Die Spur ist bevorzugt in idealer Nennlage ausgeführt, um das Profil in oder näherungsweise in dessen Ideallage zu zwingen.

Des Weiteren sieht ein Ausführungsbeispiel vor, dass die Anpressmittel in Wirkverbindung mit der Profilaufnahmespur an derselben angeordnet sind. Dadurch dass die Anpressmittel in unmittelbarer Wirkverbindung zu der Profilaufnahmespur ausgebildet sind, entstehen kurze Anpresswege. Bevorzugt sind die Anpressmittel als Teil der Profilaufnahmespur ausgebildet. So dienen die Anpressmittel außer zum Anpressen noch zur Lagerung des Profils.

Auch ist bevorzugt, dass die Anpressmittel benachbart zu und entlang der Kontur der Profilaufnahmespur ausgebildet sind. Somit kann über die gesamte aufzunehmende Kontur ein entsprechendes Anpressmittel, bevorzugt in Form eines schlauchförmigen Elements ausgebildet werden.

Darüber hinaus ist es bevorzugt, dass das erste Anpressmittel seitlich in Wirkverbindung zu der Aufnahmespur ausgebildet ist, um eine im Wesentlichen seitliche Anpresskraft auf ein eingelegtes Profil zu übertragen. Auf diese Weise kann das Profil in eine Richtung angepresst und gelagert werden.

Für eine optimale Anpressung ist es auch bevorzugt, dass das zweite Anpressmittel unterhalb in Wirkverbindung zu der Aufnahmespur ausgebildet ist, um eine im Wesentlichen senkrecht zu einer Verbindungsfläche des Profils wirkende Anpresskraft auf ein eingelegtes Profil zu übertragen. Somit bewirken die beiden Anpressmittel eine Anpressung in zwei unterschiedliche Richtungen, so dass eine optimale Anpressung erfolgen kann. Die beiden miteinander zu verbindenden Teile -Profil und Scheibe - werden bevorzugt in einem Verbindungsbereich miteinander Verbunden. Der Verbindungsbereich umfasst entsprechende Kontaktbereiche. An dem Profil ist deshalb eine erste Verbindungsfläche ausgebildet und an der Scheibe eine zweite Verbindungsfläche. Bevorzugt ist, dass die Verbindungsflächen jeweils in einer entsprechenden Ebene ausgebildet sind, wobei die Ebenen zueinander korrespondieren. Die Anpressung erfolgt zu einem Teil in senkrechte Richtung zu der Verbindungsfläche, so dass einer erforderliche Anpresskraft für das Anpressen optimal für die Anpressung nutzbar ist. Die Verbindungsfläche des Profils ist bevorzugt eine Klebefläche.

Ein bevorzugte Ausführung sieht vor, dass die Anpressmittel als mittels Druckluft aktivierbare Druckluft-Schlauchelemente ausgebildet sind. Somit lässt sich ein einfaches Anpressen durch Beaufschlagen der Schlauchelemente mit Druckluft realisieren. Druckluft ist ein günstiges und weit verfügbares Druckmittel, mit dem entsprechend hohe Anpresskräfte erzeugt werden können. Zudem ist Druckluft umweltfreundlich und lässt sich schonend entsorgen bzw. wieder verwenden.

Ein Ausführungsbeispiel sieht vor, dass die Profilzuführeinrichtung einen vertikal verfahrbaren (Vertikal-)Schlitten und einen horizontal verfahrbaren (Horizontal-)Schlitten aufweist. Einer der Schlitten kann dabei als der verfahrbare Profilaufnahmeschlitten ausgebildet sein. Vertikal und horizontal verfahrbar umfasst das Verfahren der Schlitten in zwei unterschiedliche Richtungen, bevorzugt in senkrecht zueinander stehende Richtungen. Horizontal und vertikal bezieht sich dabei bevorzugt auf die Zuführrichtung der Scheibe, welche bevorzugt horizontal zugeführt wird.

Ein weiteres Ausführungsbeispiel sieht vor, dass der vertikal verfahrbare Schlitten oder der Vertikalschlitten und der horizontal verfahrbare Schlitten oder Horizontalschlitten über ein Kulisse gekoppelt geführt sind. Dabei hängt die Bewegung des einen Schlitten von dem anderen ab, so dass eine geführte Bewegung des einen Schlitten in Abhängigkeit von dem anderen Schlitten gewährleistet ist. Dies wird bevorzugt über eine Kulisse realisiert.

Bevorzugt ist deshalb, dass die Kulisse eine Ausnehmung aufweist, in welcher einer der beiden Schlitten gekoppelt geführt ist. Der in der Ausnehmung der Kulisse geführte Schlitten weist entsprechend ein sich in die Ausnehmung erstreckenden Bereich auf, welche entlang der Ausnehmung geführt ist. Bevorzugt sind zwei Kulissen und zwei Bereiche ausgebildet, um eine gute Führung zu realisieren, Weiter bevorzugt sind die Bereiche so angeordnet, dass sie bei einer geführten Bewegung an dem Rand der Ausnehmung entlang verlaufen.

Ein Ausführungsbeispiel der vorliegenden Erfindung sieht vor, dass die Kulisse an dem anderen Schlitten der beiden Schlitten fest angeordnet ist. So wird auf einfache Weise eine gekoppelte, geführte Bewegung der beiden Schlitten realisiert. Wird nun ein Schlitten bewegt, bewegt sich die an dem Schlitten befestigte Kulisse mit dem Schlitten mit. Der andere Schlitten, der in der Ausnehmung der Kulisse geführt ist, kann eine eigene Bewegung nur im Rahmen der Form der Ausnehmung durchführen. Durch die Führung entlang des Randes der Ausnehmung der Kulisse wird der andere Schlitten entsprechend dieses Randes mitgeführt.

Bevorzugt weist die Ausnehmung der Kulisse einen Querschnitt auf, der als ellipsenförmiger Querschnitt ausgebildet ist. Der Querschnitt kann entsprechend den Anforderung so ausgebildet sein, dass dieser jede beliebige Form annehmen kann. Bevorzugt ist jedoch die Ellipsenform oder eine stetig verlaufende Form ohne Absätze und Sprungstellen für die Führung der beiden Schlitten.

Die technische Lehre der Erfindung sieht weiter einen Montagetisch mit einem tragenden Unterbau und einer erfindungsgemäßen Montagevorrichtung vor. Die Montagevorrichtung lässt sich so problemlos und effizient als Montagetisch einsetzen.

Weiter sieht die technische Lehre der Erfindung ein Montageverfahren zum Montieren eines Profils an einer Scheibe, insbesondere an einer Windschutzscheibe eines Kraftfahrzeugs vor, umfassend die Schritte: Zuführen einer Scheibe mittels einer Scheiben-Zuführeinrichtung zu einer ersten, vorbestimmten Montageposition, Zuführen eines Profils zu einer zu der ersten Montageposition benachbarten zweiten Montageposition, Zusammenfügen der Scheibe und des Profils in eine gemeinsame Fügeposition, wobei der Schritt Zusammenfügen den Schritt Aktivieren von elastischen Anpressmitteln, um deren Volumen zu verändern.

Die Volumenveränderung kann beispielsweise ein Ausdehnen des Volumens und/oder ein Formändern oder Deformieren des Volumens sein.

Mit diesem Verfahren lassen sich schnell und sicher auf einfache Weise ein Profil und eine Scheibe verbinden. Über das Ausdehnen der Anpressmittel lassen sich leichte Toleranzen, Spalte, Spiel und dergleichen leicht ausgleichen, wobei trotzdem eine gleich bleibend gute Anpressung und damit Verbindung von Profil und Scheibe gewährleistet ist.

Insbesondere sieht ein Montageverfahren bevorzugt vor, dass der Schritt Aktivieren weiter den Schritt umfasst: Zuführen eines Druckmittels zu und/oder in die Anpressmittel. Auf diese Weise ist eine einfache und umweltschonende Aktivierung zum Betreiben des Verfahrens möglich.

Weiter sieht ein bevorzugtes Ausführungsbeispiel vor, dass der Schritt Zuführen weiter den Schritt umfasst: Zuführen eine Druckmittels zu einem ersten Anpressmittel und Zuführen eines Druckmittels zu einem zweiten Anpressmittel, wobei die Schritte gleichzeitig oder zeitlich versetzt erfolgen können. So kann beispielsweise zuerst ein in eine Richtung wirkendes Anpressmittel mit Druck beaufschlagt werden, wodurch ein Toleranzausgleich in diese Richtung durch die Volumenausdehnung des Anpressmittels erfolgt. Nach dem Ausrichten kann eine weitere Ausrichtung in eine Wirkrichtung des zweiten Anpressmittels erfolgen, wobei das erste Anpressmittel in einem druckbeaufschlagten Zustand verbleiben kann oder druckentlüftet ist.

Auch ist es bevorzugt, dass das Zuführen einer Scheibe weiter die Schritte umfasst: Verfahren der Scheiben-Zuführeinrichtung in eine Ausgangsposition, Öffnen der Scheiben-Zuführeinrichtung, Einlegen der Scheibe, Ausrichten der Scheibe, Fixieren der Scheibe, Verfahren der Scheiben-Zuführeinrichtung in die erste Montageposition.

Auf diese Weise lässt sich mit wenigen Schritten ein Scheibe in eine erste Montageposition verfahren. Insbesondere lässt sich das Verfahren optimal automatisieren.

Analog ist es bevorzugt, dass das Zuführen des Profils weiter die Schritte umfasst: Verfahren der Profil-Zuführeinrichtung in eine Ausgangsposition, Öffnen der Profil-Zuführeinrichtung, Einlegen des Profils. Ausrichten des Profils. Fixieren des Profils, Verfahren der Profil-Zuführeinrichtung in die zweite Montageposition. Ebenfalls ist hiermit ein einfaches Verfahren bereitgestellt, welches in wenigen Schritten das Verfahren eines Profils in eine zweite Montageposition ermöglicht. Dabei können die Schritte, wie auch zuvor die Schritte zum Zuführen der Scheibe manuell, automatisiert oder auch teilautomatisiert durchgeführt werden.

Die technische Lehre der vorliegenden Erfindung sieht weiter vor, dass ein Computerprogramm mit Programmcode-Mitteln vorgesehen ist, um alle erfindungsgemäßen Schritte durchzuführen, wenn das Programm auf einem Computer ausgeführt wird.

Auch sieht die technische Lehre vor, dass ein Computerprogrammprodukt mit Programmcode-Mitteln, die auf einem computerlesbaren Datenträger gespeichert sind, vorgesehen ist, um das erfindungsgemäße Verfahren durchzuführen, wenn das Programmprodukt auf einem Computer ausgeführt wird.

Über das Computerprogramm lässt sich das Verfahren gut auf einem Computer einsetzten und somit lässt sich das gesamte Verfahren gut automatisieren. Um das Verfahren auf möglichst vielen Anlagen umzusetzen, lässt sich das Computerprogramm auch entsprechend auf oder als Computerprogrammprodukt(en) ablegen. Auf diesem Weg ist beispielsweise das Computerprogramm global verfügbar und das Verfahren kann weit verbreitet eingesetzt werden.

Auch sieht die technische Lehre die Verwendung einer erfindungsgemäßen Montagevorrichtung an einem erfindungsgemäßen Montagetisch zur Montage von Scheiben, Windschutzscheiben, Fensterscheiben, Kunststoffscheiben, Glasscheiben und dergleichen mit Profilen, Profilrahmen, Gummiprofilen und dergleichen, insbesondere in der Automobiltechnik, in der Fenster-, Türen- und Beschlägetechnik und dergleichen vor. Somit lässt sich das Verfahren in weiten Bereichen der Fügetechnik einsetzen.

Der Ablauf der Montage ist im Folgenden beschrieben:

Die Montagevorrichtung befindet sich in einer Ausgangssituation oder in einem Anfangszustand. In dieser Ausgangssituation ist die Scheiben-Zuführeinrichtung mit deren Komponenten ebenfalls in der Ausgangssituation. Dies bedeutet, dass sich der gesamte, in der Scheiben-Zuführeinrichtung umfasste Scheibenschlitten zum Aufnehmen und Verfahren der Scheibe in seiner hintersten Anschlagsposition befindet. Die an dem Scheibenschlitten ausgebildeten Scheibenschlittenklemmungs-Einrichtungen zur Klemmung der Schreibe auf dem Scheibenschlitten, welche bevorzugt pneumatisch betrieben werden, sind aktiv. Die Rollenanschläge, welche ebenfalls an dem Scheibenschlitten ausgebildet sind, um eine Ausrichtung der Scheibe zu ermöglichen, sind in deren untere Position ausgefahren und befinden sich somit in Anschlagbereitschaft. Die an dem Scheibenschlitten angeordneten Zentrierspannbacken zum zentrischen Greifen und Verspannen der Scheibe sind aufgefahren. Auch die Scheibenandrückrollen zum Andrücken der Scheibe sind aufgefahren. In diesem Zustand lässt sich die Scheibe leicht in der Scheiben-Zuführeinrichtung einlegen.

Die Profil-Zuführeinrichtung befindet sich in der folgenden Ausgangssituation:
Alle Spanneinrichtungen zum Spannen des Profils sind geöffnet. Die als Schlauchelemente ausgebildete Anpressmittel sind entlüftet und somit deaktiviert. Die beiden an der Profil-Zuführeinrichtung ausgebildeten Schlitten - der Vertikalschlitten und der Horizontalschlitten - befinden sich in einer unteren bzw. hinteren Position. Der Schubzylinder zum Verfahren der beiden Schlitten befindet sich entsprechend in einer eingefahrenen Position. Die an dem Vertikalschlitten vorhandenen Klemmungen, die bevorzugt pneumatisch betrieben werden, sind geöffnet.

Das Montageverfahren bzw. der Fügeprozess läuft wie folgt ab:

Eine Scheibe wird mit einer Scheibenkante, an der das Profil angepresst werden soll, in Richtung Rollenanschläge und, falls die Scheibe eine Wölbung aufweist, mit deren Wölbung nach oben in den Scheibenschlitten grob vorgerichtet eingelegt. Dieses kann mittels eines Roboters oder auch per Hand durchgeführt werden. Die Andrückrolle verfährt nun nach vorne, um die Scheibe und insbesondere die Kante der Scheibe, an der das Profil befestigt werden soll, gegen die vorzugsweise 2 Rollenanschläge zu verfahren. Danach werden die Zentrierspannbacken zugefahren und die Scheibe wird so eingespannt auf dem Schlitten gehalten. Um eine sichere Lagerung zu gewährleisten sind Auflagekugeln, eine Scheibenauflagespur, die Rollenanschläge, die Andrückrolle und die Zentrierspannbacken vorgesehen, um so die Scheibe genau definiert im Raum zu lagern. Hiernach wird de Andrückrolle zurückgefahren. Dann werden die Rollenanschläge wieder hochgefahren und die pneumatische Klemmung der Scheibenschlittens wird gelöst. Danach wird die Scheibe auf Anschlag in die erste Montageposition verfahren. In dieser ersten Montageposition wird die pneumatische des Scheibenschlittens aktiviert und die Scheibe fest auf dem Schlitten gehalten.

Parallel dazu, vor den zuvor aufgeführten Schritten oder danach, wird das mit der Scheibe zusammen zufügende Profil in die Aufnahmespur eingelegt. Die Aufnahmespur ist als 3D Aufnahmespur ausgebildet. Spanner zum Halten des Profils in der Aufnahmespur werden geschlossen. Das Profil ist bevorzugt mit einem Klebeband, welches ein Abdeckband (Liner) umfasst, in dem zu fügenden Bereich zumindest teilweise versehen. Dieses Klebeband erstreckt sich bevorzugt über die Länge des Profils. Um Scheibe und Profil zu fügen, wird das Abdeckband als nächstes entfernt. Dann wird der Schubzylinder ausgefahren und somit wird die vordere oder Vertikal-Schlitteneinheit in vertikaler Richtung bewegt und über eine Kulisse geführt, verfährt der Horizontalschlitten mit der integrierten 3D-Aufnahmespur in Richtung der Scheibenunterkante. Die Profil-Zuführeinrichtung ist jetzt in eine zweite Montageposition verfahren.

In diesen beiden Positionen sind die Scheibe und das Klebeband des Profils in vertikaler Richtung auf einen definierten Abstand zueinander verfahren. Der Abstand ist bevorzugt in dem Bereich von >=0mm bis <= 20 mm, weiter bevorzugt von >= 0,1 mm bis <= 10 mm und am meisten bevorzugt von >=0,2 mm bis <= 1mm und beträgt bevorzugt etwa 0,5 mm. Dabei kontaktieren sich Scheibe und Klebeband nicht.

In horizontaler Richtung ist eine Gummidichtlippe des Profils mit der Scheibenkante spaltfrei oder nahezu spaltfrei in Kontakt zueinander stehend angeordnet.

Nun werden die an der Scheiben-Zuführeinrichtung ausgebildeten großen Spanner geschlossen, um die Scheibe auf die Scheibenauflagespur zu pressen. Der erste, im Wesentlichen in horizontale Richtung wirkende Schlauch wird druckbeaufschlagt, um Toleranzen, Spalte und dergleichen zwischen Gummilippe und Scheibenunterkante auszugleichen. Die kleinen Profilspanner werden geöffnet und der zweite Schlauch wird mit Druck beaufschlagt, um Profilklebeband und Scheibenunterfläche in Kontakt zu bringen und miteinander zu verkleben.

Nach diesem Verkleben werden die Schläuche entlüftet, die großen Spanner geöffnet und die vertikale Schlittenklemmung geöffnet. Der Schubzylinder wird eingefahren und fährt den Vertikalschlitten nach unten. Über die Kulisse gesteuert, fährt der Horizontalschlitten einen Bereich mit dem Vertikalschlitten nach unten, bevorzugt etwa 10 mm, um das angeklebte Profil aus der Aufnahmespur zu entnehmen. Danach zwingt die Kulisse den Horizontalschlitten entlang der Rückstellkurve in seine Anfangs- oder Ausgangsposition. Der Scheibenschlitten wird mit der Scheibe und dem angeklebten Profil in die hintere Anschlagsposition zurückgefahren, die Scheibenschlittenklemmung wird deaktiviert, die Zentrierbacken werden geöffnet und die Scheibe mit dem angeklebten Profil kann entnommen werden. Anschließend werden die Rollenanschläge nach unten in Anschlagposition gefahren, so dass die Ausgangs- oder Anfangssituation wieder hergestellt ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig.1 eine schematische, perspektivische Ansicht einer erfindungsgemäßen Montagevorrichtung mit einem tragenden Unterbau,
Fig. 2 eine schematische, perspektivische Detailansicht einer an der Profit-Zuführeinrichtung ausgebildete Profilaufnahme.
Fig. 3 eine schematische, perspektivische Detailansicht einer Aufnahmespur mit Profil und als Anpressmittel ausgebildete Fügemittel und
Fig. 4 eine schematische, perspektivische Detailansicht einer Kulisse.

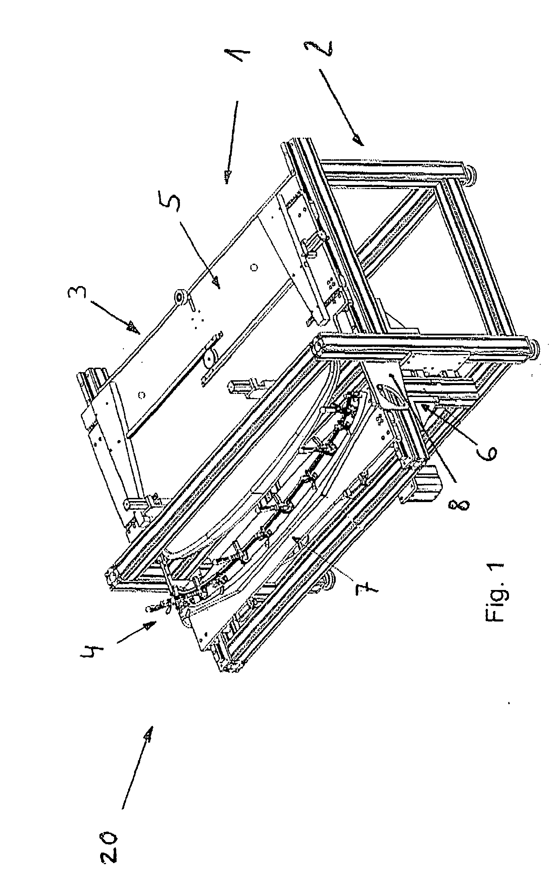

Fig.1 zeigt schematisch in einer perspektivischen Ansicht eine Montagevorrichtung 1 mit einem tragenden Unterbau 2. Der Unterbau 2 und die Montagevorrichtung 1 bilden zusammen einen Montagetisch 20. Die Montagevorrichtung 1 umfasst eine Scheiben-Zuführeinrichtung 3 und eine Profil-Zuführeinrichtung 4. Die Scheiben-Zuführeinrichtung 3 umfasst einen verfahrbaren Scheibenschlitten 5 mit entsprechenden Vorrichtungen zur Aufnahme und Klemmung einer Scheibe. Der Scheibenschlitten ist im Wesentlichen in einer horizontalen Ebene verfahrbar. Beim horizontalen Verfahren wird die Scheibe bis zu einem Anschlag verfahren und entsprechend ausgerichtet.

Die Profil-Zuführeinrichtung 4 umfasst einen Vertikalschlitten 6 für eine im Wesentlichen vertikale Verfahrbewegung und einen Horizontalschlitten 7 für eine im Wesentlichen horizontale Verfahrbewegung. Horizontalschlitten 7 und Vertikalschlitten 6 sind über eine Kulisse 8 miteinander gekoppelt, so dass der Horizontalschlitten 7 bei der vertikalen Bewegung des Vertikalschlittens 6 neben der Horizontalbewegung auch eine vertikale Bewegung gemäß der Form der Kulisse 8 durchführt.

Über die Zuführeinrichtungen 3, 4 werden entsprechend eine Scheibe und ein Profil zum Zusammenfügen zueinander bewegt. Die Scheibe wird in eine erste Montageposition bewegt und das Profil wird in eine zweite Montageposition bewegt, wobei erste und zweite Montageposition benachbart angeordnet sind, so dass die Scheibe und das Profil eng beabstandet zueinander positioniert, aber noch nicht zusammengefügt sind. Das bedeutet, dass zumindest ein Spalt in zumindest einer Richtung zwischen Scheibe und Profil besteht.

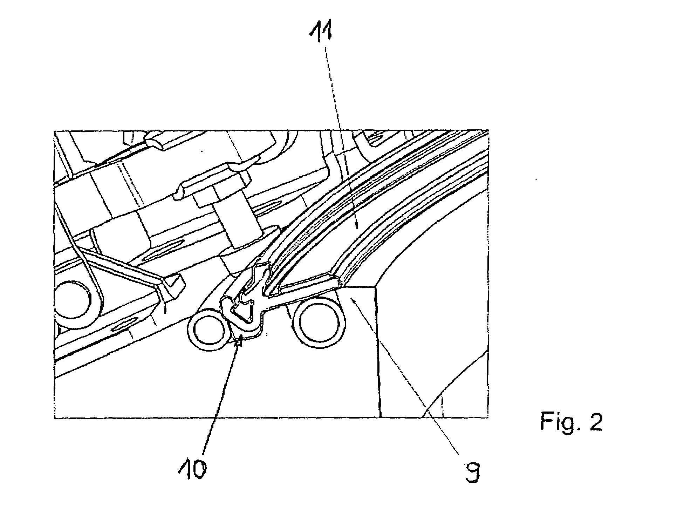

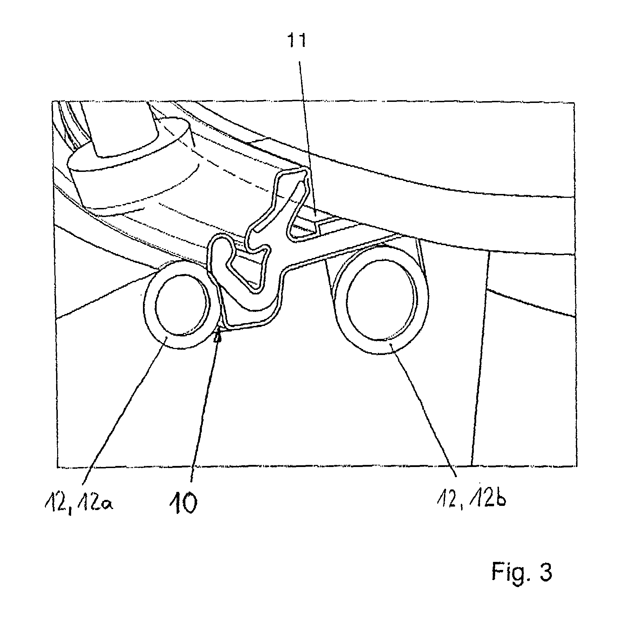

Fig. 2 zeigt eine schematische, perspektivische Ansicht einer Profilaufnahme 9. Die Profilaufnahme 9 ist an der Profil-Zuführeinrichtung ausgebildet. Die Profilaufnahme 9 weist eine entsprechende Ausnehmung in Form einer Aufnahmespur 10 auf, um ein zu fügendes Profil 11 darin aufzunehmen. Die Geometrie der Aufnahmespur 10 kann beliebig ausgebildet sein und kann eine relativ komplexe 3D-Form aufweisen. An der Profilaufnahme 9 sind zur Fixierung des Profils 11 Klemm- und/oder Halteeinrichtungen angeordnet, um das Profil 11 in der Aufnahmespur 10 zu Halten. In dieser Fig. ist das Profil 11 in der Aufnahmespur 10 angeordnet. In Fig. 3 ist die Aufnahmespur 10 mit darin angeordnetem Profil 11 vergrößert dargestellt.

Fig. 3 zeigt schematisch in einer perspektivischen Ansicht die Aufnahmespur 10 mit einem darin angeordneten Profil 11.

Die Aufnahmespur 10 ist dem aufzunehmenden Profil 11 angepasst, so dass dieses sicher vordefiniert im Raum in der Aufnahmespur 10 gehalten wird. Das Profil 11 ist als Kunststoffprofil ausgebildet und weist eine Anpressfläche auf, mit der das Profil an die Scheibe gepresst werden soll. An dieser Anpressfläche ist ein mit einem Abdeckband versehener Klebestreifen angeordnet. Vor dem Zusammenfügen wird das Abdeckband entsprechend entfernt, so dass der Klebestreifen mit dem entsprechenden Haftvermittler an die Scheibe angepresst werden kann. Die Aufnahmespur 10 ist als Ausnehmung in einen Profilkörper ausgebildet. Zusätzlich zu der die Aufnahmespur 10 bildenden Ausnehmung sind in dem Profilkörper weitere Ausnehmungen zur Aufnahme von Fügemitteln ausgebildet. Die Fügemittel sind vorliegende als Anpressmittel 12 ausgebildet, wobei ein als erstes Schlauchelement 12a ausgebildetes erstes Anpressmittel und ein als zweites Schlauchelement 12b als zweites Anpressmittel vorgesehen sind. Das erste Schlauchelement 12a ist etwa in einer seitlich zu der Aufnahmespur 10 ausgebildeten Ausnehmung angeordnet, um eine im Wesentlichen seitliche Anpresskraft auf das Profil 11 aufzubringen. Die Ausnehmungen zur Bildung der Aufnahmespur 10 und zur Aufnahme des ersten Anpressmittels sind vorliegend durchgehend, das heißt als zusammen ausgebildete Ausnehmung gebildet. Das zweite Schlauchelement 12b ist etwa in einer unterhalb der Aufnahmespur 10 ausgebildeten Ausnehmung angeordnet, um eine im Wesentlichen vertikale Anpresskraft auf das Profil 11 aufzubringen. Die Ausnehmungen zur Bildung der Aufnahmespur 10 und zur Aufnahme des zweiten Anpressmittels sind vorliegend durchgehend, das heißt als zusammen ausgebildete Ausnehmung gebildet. Bei in der Aufnahmespur angeordnetem Profil 11 stehen das Profil 11 und die Anpressmittel 12 in einer Wirkverbindung, das heißt bei Aktivierung der Anpressmittel 12 wirken die Anpressmittel 12 auf das Profil 11 ein. Die Schlauchelemente 12a, 12b sind aus einem elastischen Material hergestellt, welches dehnbar ist. Bei Beaufschlagung mit einem Druckmittel, zum Beispiel Druckluft, dehnen sich die Schlauchelemente 12a, 12b in radiale Richtung aus und vergrößern so ihr Volumen, wobei dabei auch der von dem Schlauchmantel umgebende Schlauchinnenraum einbezogen ist. Durch das Ausdehnen wird eine Kraft von den Schlauchelementen 12a, 12b auf das Profil 11 übertragen. Diese Kraft oder auch Anpresskraft drückt das Profil 11 an eine entsprechende Scheibe, wobei zudem ein zwischen der Scheibe und dem Profil 11 befindlicher Spalt je nach Steuerung der Anpressmittel12 ausgeglichen wird.

Wenn die Schlauchelemente 12a, 12b nicht gleichzeitig angesteuert werden, dann erfolgt zunächst eine Einwirkung auf das Profil 11 in eine erste Wirkrichtung, zum Beispiel eine horizontale Wirkrichtung durch das erste Schlauchelement 12a, und dann eine Einwirkung auf das Profil 11 in eine zweite Wirkrichtung, zum Beispiel eine vertikale Wirkrichtung durch das zweite Schlauchelement 12b. Hierdurch kann somit zunächst ein horizontaler Spaltausgleich erfolgen, bevor ein im Wesentlichen vertikales Anpressen des Profils 11 an die Scheibe erfolgt.

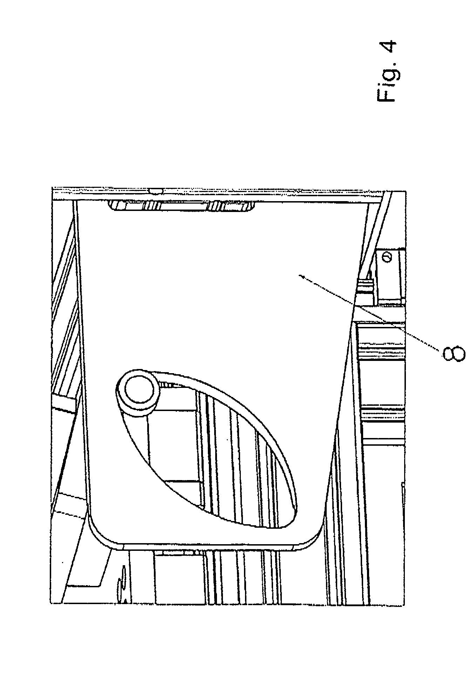

Nachdem Anpressen des Profils 11 an die Scheibe werden die Schlitten auseinander gefahren. Hierbei wird die Profil-Zuführeinrichtung abgesenkt und die Scheiben-Zuführeinrichtung zurückgefahren. Die Profil-Zuführeinrichtung umfasst zwei verfahrbare Schlitten, einen Horizontalschlitten und einen Vertikalschlitten. Diese sind miteinander gekoppelt, wobei eine Kulisse die Bewegung von Vertikalschlitten und Horizontalschlitten zumindest teilweise festlegt. Die Kulisse ist in Fig. 4 dargestellt.

Fig. 4 zeigt eine schematische, perspektivische Detailansicht einer Kulisse 8. Die Kulisse 8 ist als etwa ellipsenförmige Ausnehmung in einem Körper ausgebildet. Die Kontur dieser Ausnehmung definiert in einem Bereich eine so genannte Rückstellkurve oder einen Weg zur Profilentformung, In die Ausnehmung greift ein Teil des Horizontalschlittens ein, wodurch der Horizontalschlitten durch die Ausnehmung entlang deren Kontur geführt ist. Fährt nun der Vertikalschlitten zurück, verfährt der an den Vertikalschlitten gekoppelte Horizontatschlitten zunächst auch vertikal. Durch die Führung des Horizontalschlittens in der Kulisse 8 wird diese Vertikalbewegung jedoch in eine durch die Kontur der Ausnehmung der Kulisse 8 vorgegeben Wegbahn umgelenkt. Im vorliegenden Fall wird bei einem Absenken des Vertikalschlittens der über die Kulisse 8 gesteuerte Horizontalschlitten zunächst etwa 10mm nach unten ohne Horizontalbewegung bewegt. Dabei wird das an die Scheibe geklebte Profil aus der Aufnahmespur "entformt" oder entfernt. Aufgrund der Kontur der Ausnehmung der Kulisse 8 wird nach dem vertikalen Verfahrweg der Horizontalschlitten entlang der Rückstellkurve bewegt. Dadurch verfährt der Horizontalschlitten in seine Ausgangssituation zurück.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Montagevorrichtung
- 2: Unterbau
- 3: Scheiben-Zuführeinrichtung
- 4: Profil-Zuführeinrichtung
- 5: Scheibenschlitten
- 6: Vertikalschlitten
- 7: Horizontalschlitten
- 8: Kulisse
- 9: Profilaufnahme
- 10: Aufnahmespur
- 11: Profil
- 12: Anpressmittel
- 12a: erstes Schlauchelement
- 12b: zweites Schlauchelement
- 20: Montagetisch

## Patentansprüche

1. Montagevorrichtung (1) zum Montieren eines Profils (11) an einer Scheibe, insbesondere an einer Windschutzscheibe eines Kraftfahrzeugs, umfassend:
eine Scheiben-Zuführeinrichtung (3) zum Zuführen einer Scheibe zu einer ersten vorbestimmten Montageposition,
eine Profil-Zuführeinrichtung (4) zum Zuführen eines Profils (11) zu einer zu der ersten Montageposition benachbarten, zweiten Montageposition,
Fügemittel, um das Profil (11) und die Scheibe an einer gemeinsamen Fügeposition zusammenzufügen,
wobei die Fügemittel elastisch, dehnbare Anpressmittel (12) umfassen, welche bei Aktivierung sich hinsichtlich ihres Volumens verändern, wodurch Scheibe und Profil (11) zusammengefügt werden.

2. Montagevorrichtung (1) nach Anspruch 1, **dadurch gekennzeichnet, dass**
die Anpressmittel (12) ein erstes Schlauchelement (12a) aus einem elastischen Material umfassen.

3. Montagevorrichtung (1) nach Anspruch 1 oder 2, **dadurch gekennzeichnet, dass**
die Anpressmittel (12) ein zweites Schlauchelement (12b) aus einem elastischen Material umfassen.

4. Montagevorrichtung (1) nach einem der vorherigen Ansprüche 1 bis 3, **dadurch gekennzeichnet, dass**
die Profil-Zuführeinrichtung (4) eine Profilaufnahme (9) zur Aufnahme des Profils (11) umfasst.

5. Montagevorrichtung (1) nach einem der vorherigen Ansprüche 1 bis 4, **dadurch gekennzeichnet, dass**
die Profil-Zuführeinrichtung (4) weiter einen verfahrbaren Profilaufnahmeschlitten umfasst, an dem die Profilaufnahme (9) ausgebildet ist.

6. Montagevorrichtung (1) nach einem der vorherigen Ansprüche 1 bis 5, **dadurch gekennzeichnet, dass**
die Profilaufnahme (9) eine Aufnahmespur (10) zur Aufnahme des Profils (11) aufweist.

7. Montagevorrichtung (1) nach einem der vorherigen Ansprüche 1 bis 6, **dadurch gekennzeichnet, dass**
die Anpressmittel (12) in Wirkverbindung mit der Aufnahmespur (9) an derselben angeordnet sind.

8. Montagevorrichtung (1) nach einem der vorherigen Ansprüche 1 bis 7, **dadurch gekennzeichnet, dass**
die Anpressmittel (12) benachbart zu und entlang der Kontur der Aufnahmespur (9) ausgebildet sind.

9. Montagevorrichtung (1) nach einem der vorherigen Ansprüche 1 bis 8, **dadurch gekennzeichnet, dass**
das erste Anpressmittel seitlich in Wirkverbindung zu der Aufnahmespur (9) ausgebildet ist, um eine im Wesentlichen seitliche Anpresskraft auf ein eingelegtes Profil (11) zu übertragen.

10. Montagevorrichtung (1) nach einem der vorherigen Ansprüche 1 bis 9, **dadurch gekennzeichnet, dass**
das zweite Anpressmittel unterhalb in Wirkverbindung zu der Aufnahmespur (9) ausgebildet ist, um eine im Wesentlichen senkrecht zu einer Verbindungsfläche des Profils wirkende Anpresskraft auf ein eingelegtes Profil (11) zu übertragen.

11. Montagevorrichtung (1) nach einem der vorherigen Ansprüche 1 bis 10, **dadurch gekennzeichnet, dass**
die Anpressmittel (12) als mittels Druckluft aktivierbare Druckluft-Schlauchelemente ausgebildet sind.

12. Montagevorrichtung (1) nach einem der vorherigen Ansprüche 1 bis 11, **dadurch gekennzeichnet, dass**
die Profilzuführeinrichtung einen vertikal verfahrbaren Vertikalschlitten (6) und einen horizontal verfahrbaren Horizontalschlitten (7) aufweist.

13. Montagevorrichtung (1) nach einem der vorherigen Ansprüche 1 bis 12, **dadurch gekennzeichnet, dass**
der vertikal verfahrbare Vertikalschlitten (6) und der horizontal verfahrbare Horizontalschlitten (7) über ein Kulisse (8) gekoppelt geführt sind.

14. Montagevorrichtung (1) nach einem der vorherigen Ansprüche 1 bis 13, **dadurch gekennzeichnet, dass**
die Kulisse (8) eine Ausnehmung aufweist, in welcher einer der beiden Schlitten gekoppelt geführt ist.

15. Montagevorrichtung (1) nach einem der vorherigen Ansprüche 1 bis 14, **dadurch gekennzeichnet, dass**
die Kulisse (8) an dem anderen Schlitten der beiden Schlitten fest angeordnet ist.

16. Montagevorrichtung (1) nach einem der vorherigen Ansprüche 1 bis 15, **dadurch gekennzeichnet, dass**
die Ausnehmung einen Querschnitt aufweist, der als ellipsenförmiger Querschnitt ausgebildet ist.

17. Montagetisch (20) mit einem tragenden Unterbau (2) und einer Montagevorrichtung (1) nach einem der vorherigen Ansprüche 1 bis 16.

18. Montageverfahren zum Montieren eines Profils (11) an einer Scheibe, insbesondere an einer Windschutzscheibe eines Kraftfahrzeugs, umfassend die Schritte:
Zuführen einer Scheibe mittels einer Scheiben-Zuführeinrichtung (3) zu einer ersten, vorbestimmten Montageposition,
Zuführen eines Profils (11) mittels einer Profil-Zuführeinrichtung (4) zu einer zu der ersten Montageposition benachbarten zweiten Montageposition,
Zusammenfügen der Scheibe und des Profils(11) in eine gemeinsame Fügeposition, wobei der Schritt Zusammenfügen den Schritt Aktivieren von elastischen Anpressmitteln (12) umfasst, um deren Volumen zu verändern.

19. Montageverfahren nach Anspruch 18, wobei der Schritt Aktivieren weiter den Schritt umfasst:
Zuführen eines Druckmittels zu und/oder in die Anpressmittel (12).

20. Montageverfahren nach Anspruch 18 oder 19, wobei der Schritt Zuführen weiter den Schritt umfasst:
Zuführen eine Druckmittels zu einem ersten Anpressmittel und
Zuführen eines Druckmittels zu einem zweiten Anpressmittel, wobei die Schritte gleichzeitig oder zeitlich versetzt erfolgen können.

21. Montageverfahren nach einem der vorherigen Ansprüche 18 bis 20, **dadurch gekennzeichnet, dass**
Das Zuführen einer Scheibe weiter die Schritte umfasst:
Verfahren der Scheiben-Zuführeinrichtung (3) in eine Ausgangsposition,
Öffnen der Scheiben-Zuführeinrichtung (3),
Einlegen der Scheibe,
Ausrichten der Scheibe,
Fixieren der Scheibe,
Verfahren der Scheiben-Zuführeinrichtung (3) in die erste Montageposition.

22. Montageverfahren nach einem der vorherigen Ansprüche 18 bis 21, **dadurch gekennzeichnet, dass**
Das Zuführen des Profils (11) weiter die Schritte umfasst:
Verfahren der Profil-Zuführeinrichtung (4) in eine Ausgangsposition,
Öffnen der Profil-Zuführeinrichtung (4),
Einlegen des Profils (11),
Ausrichten des Profils (11),
Fixieren des Profils (11),
Verfahren der Profil-Zuführeinrichtung (4) in die zweite Montageposition.

23. Computerprogramm mit Programmcode-Mitteln, um alle Schritte von jedem beliebigen der Ansprüche 1 bis 22 durchzuführen, wenn das Programm auf einem Computer ausgeführt wird.

24. Computerprogrammprodukt mit Programmcode-Mitteln, die auf einem computerlesbaren Datenträger gespeichert sind, um das Verfahren nach jedem beliebigen der Ansprüche 1 bis 22 durchzuführen, wenn das Programmprodukt auf einem Computer ausgeführt wird.

25. Verwendung einer Montagevorrichtung (1) gemäß einem der vorherigen Ansprüche 1 bis 16 an einem Montagetisch (20) gemäß Anspruch 17 zur Montage von Scheiben, Windschutzscheiben, Fensterscheiben, Kunststoffscheiben, Glasscheiben und dergleichen mit Profilen (11), Profilrahmen, Gummiprofilen und dergleichen, insbesondere in der Automobiltechnik, in der Fenster-, Türen- und Beschlägetechnik und dergleichen.
